# EUROPÄISCHE PATENTSCHRIFT

(11) **EP 3 957 565 B1**
(45) Veröffentlichungstag und Bekanntmachung des Hinweises auf die Patenterteilung: **08.07.2026**
(21) Anmeldenummer: 21202448.3
(22) Anmeldetag: 16.02.2011
(51) Int. Cl.: B64D 11/02, A47K 4/00, B64D 11/04, B64D 11/06

(54) **TOILETTENANORDNUNG FÜR EIN VERKEHRSMITTEL**
TOILET ARRANGEMENT FOR A MEANS OF TRANSPORT
AGENCEMENT DE TOILETTES POUR UN MOYEN DE TRANSPORT

(30) Priorität: 19.02.2010 US 30621310 P; 19.02.2010 DE 102010008625
(43) Veröffentlichungstag der Anmeldung: 23.02.2022
(62) Teilanmeldung aus: 11703892.7
(73) Patentinhaber: Airbus Operations GmbH, 21129 Hamburg (DE)
(72) Erfinder: SCHLIWA, Ralf, 21129 Hamburg (DE); BARBER, Andreas, 21129 Hamburg (DE); STRASDAS, Maria, 21129 Hamburg (DE)
(74) Vertreter: LKGLOBAL Partnerschaftsgesellschaft mbB

(56) Entgegenhaltungen:
- EP-A2- 0 867 365
- EP-A2- 1 209 078
- EP-A2- 1 338 508
- WO-A1-03/064790
- WO-A2-2004/076279
- DE-A1- 4 336 418
- FR-A1- 2 929 244

## Beschreibung

Die vorliegende Anmeldung ist eine Teilanmeldung der Europäischen Patentanmeldung Nr. 11703892.7, welche auf der PCT-Anmeldung PCT/EP2011/052307 basiert, eingereicht am 16. Februar 2011.

### TECHNISCHES GEBIET

Die Erfindung betrifft eine Passagierkabine für ein Luftfahrzeug mit einer darin angeordneten Toilettenanordnung sowie ein Luftfahrzeug mit einer derartigen Passagierkabine.

### HINTERGRUND DER ERFINDUNG

Ein wesentliches Ziel bei der Einrichtung von Passagierkabinen in Verkehrsmitteln ist häufig die Maximierung der zur Verfügung stehenden Anzahl von Passagiersitzen, die durch die Anzahl von vorgeschriebenen Sitzen für Besatzungsmitglieder eingeschränkt wird, weiterhin durch vorgeschriebene Sicherheitseinrichtungen, beliebige Versorgungseinrichtungen und Toiletten. Das Verhältnis der Anzahl von Passagiersitzen zu übrigen Einrichtungen in Passagierkabinen ist ein Faktor, der die Wirtschaftlichkeit eines Flugzeugs im Linienverkehr mitbestimmt. Neben behördlichen Vorschriften für Muster- und Betriebszulassung von Verkehrsmitteln sind bei Auswahl von Sitzgrößen, Sitzabständen, Versorgungseinrichtungen und Toiletten auch Kundenwünsche, beispielsweise kundenspezifische Sondereinbauten von Betreibern des Verkehrsmittels, mit einzubeziehen. Je nach Gestaltung von Einbauten in der Passagierkabine und deren Platzbedarf können intelligente Konstruktions- und Anordnungslösungen die Anzahl von Passagiersitzen optimieren.

Aus Platzgründen und mangels anderweitiger Vorschriften existieren im Stand der Technik Verkehrsmittel, die lediglich Standardtoiletten aufweisen, jedoch keine eigenständigen Toiletten für bewegungseingeschränkte Personen. Derartige Toiletten, die im Folgenden auch "Behindertentoiletten" genannt werden, sollten etwa in der Lage sein, mit einem Rollstuhl befahren zu werden. Insbesondere in Flugzeugen sind derartige, einen deutlich erhöhten Bauraumbedarf aufweisende Behindertentoiletten kaum zu finden, denn diese reduzieren deutlich die Wirtschaftlichkeit des betreffenden Flugzeugs, bei gleichzeitig sehr geringer Benutzungsfrequenz.

DE 43 00 877 A1 und US 5 474 260 A zeigen ein Flugzeug mit einer Reihe von Versorgungseinrichtungen und Toiletten, die als eigenständige, herkömmliche Toilettenräume konzipiert sind.

EP 1338508 A2 beschreibt eine erweiterbare Toilette für Flugzeuge mit multimodaler Nutzung als Toilette, Dusche und Umkleideraum. Die Vorrichtung umfasst eine Primärstruktur mit einem Volumen, das sich in einen benachbart angeordneten ungenutzten Raum ausdehnt, wie einen Haupteingangs-Quergang eines Flugzeugs.

EP 1209078 A2 beschreibt einen Toilettenraum an Bord eines Flugzeugs, der sich durch Verschieben eines als Verstaubereich, z.B. als Schrank, genutzten Seitenteils in den Eingangsbereich des Flugzeugs hinein vergrößern lässt

WO 2004/076279 A2 beschreibt die Anordnung einer Vielzahl von Bordtoiletten im Heckbereich eines Großraum-Flugzeugs. Der Toilettenkomplex enthält einen Frauen- und einen Männer-Bereich, die jeweils einen abgetrennten Vorbereich aufweisen, in dem ein zentrales Waschbecken vorgesehen ist. Außerhalb der Vorbereiche sind weitere Waschbecken zur Kabine hin angeordnet.

FR 2929244 A1 beschreibt die Anordnung eines Servicebereichs im Heckbereich eines Großraum-Flugzeugs. Im hinteren Abschlussbereich der Kabine sind vor dem Druckschott mehrere Staufächer für Trolleys vorgesehen, um dort eine Bordküche zu bilden. Vor den Wand mit Staufächern ist ein quer verlaufender Gang ausgebildet, auf dessen anderen Längsseite weitere Staufächer für Trolleys vorgesehen sind. Bordtoiletten sind als separate Einheiten ausgebildet, zum Beispiel seitlich neben den Ein- und Ausstiegsbereichen.

### ZUSAMMENFASSUNG DER ERFINDUNG

Es ist eine Aufgabe der Erfindung, eine Toilettenanordnung für ein Verkehrsmittel anzugeben, die eine Benutzung durch bewegungseingeschränkte Personen erlaubt, aber dennoch die Wirtschaftlichkeit des Verkehrsmittels nicht übermäßig einschränkt.

Die Aufgabe wird durch den Gegenstand der Ansprüche 1 und 6 gelöst. Es sind eine Passagierkabine für ein Luftfahrzeug mit einer darin angeordneten Toilettenanordnung und ein Luftfahrzeug gemäß den Merkmalen der Ansprüche angegeben. Weiterbildungen der Erfindung ergeben sich aus den Unteransprüchen.

Die beschriebenen Ausführungsbeispiele betreffen gleichermaßen die Toilettenanordnung und das Luftfahrzeug. In anderen Worten lassen sich auch alle im Folgenden beispielsweise im Hinblick auf die Toilettenanordnung genannten Merkmale für die Verwendung oder in dem Luftfahrzeug umsetzen, und umgekehrt.

Gemäß der Erfindung ist eine Toilettenanordnung für ein Verkehrsmittel angegeben, welche einen ersten Toilettenraum, einen dazu benachbarten zweiten Toilettenraum und eine zwischen dem ersten Toilettenraum und dem zweiten Toilettenraum befindliche Trennwand aufweist. Die Trennwand ist bewegbar gelagert und dazu eingerichtet, in eine Öffnungsposition gebracht zu werden, bei der eine Abtrennung zwischen dem ersten Toilettenraum und dem zweiten Toilettenraum aufgehoben wird.

Dies bedeutet mit anderen Worten, dass die erfindungsgemäße Toilettenanordnung aus zwei benachbarten Toilettenräumen besteht, die durch Bewegen in eine Öffnungsposition einen einzigen, deutlich größeren "gemeinsamen" Toilettenraum ausbildet, der zum Befahren mit einem Rollstuhl und zum vorübergehenden Lagern des Rollstuhls auf einer begehbaren Fläche einer der beiden ursprünglich voneinander unabhängigen Toilettenräume ausreicht. Gleichzeitig ist der gemeinsame Toilettenraum derart dimensioniert, dass es sogar einer zweiten Person ermöglicht werden kann, einer bewegungseingeschränkten Person in dem gemeinsamen Toilettenraum behilflich zu sein, beispielsweise beim Umsetzen von einem Rollstuhl auf einen Toilettensitz. Die besonderen Vorteile der erfindungsgemäßen Toilettenanordnung liegen darin, zwei eigenständige Toilettenräume durch einfache Handgriffe zu einem gemeinsamen Toilettenraum zu kombinieren, so dass lediglich bei Bedarf eine Behindertentoilette geschaffen wird, gleichzeitig aber auch kein Bauraum innerhalb der Kabine des Verkehrsmittels zusätzlich beansprucht wird, so dass die Wirtschaftlichkeit des Verkehrsmittels überhaupt nicht darunter leidet.

Die Bewegung der Trennwand kann auf beliebige Art und Weise realisiert werden, etwa durch Klappen, Verschwenken, Schieben oder dergleichen. Desweiteren könnte die Trennwand nach Art einer Jalousientür ausgeführt sein und bei Bedarf horizontal oder vertikal auf- und abgerollt werden.

Gemäß einer weiteren Ausführungsform der Erfindung weist die Trennwand mindestens einen Verriegelungsmechanismus auf, der durch Betätigen eines Betätigungsmittels die Trennwand in mindestens einer Öffnungsposition und mindestens einer Schließposition arretiert. Dadurch wird die Konvertierung der zwei Toilettenräume vereinfacht, da die Trennwand an einer definierten Stelle positioniert ist und durch Vibrationen oder dergleichen nicht aus der vorhergesehenen Position gelöst werden kann. Dies vereinfacht auch die Benutzung der erfindungsgemäßen Toilettenanordnung, da die Trennwand nicht plötzlich durch Vibrationen mitten in dem gemeinsamen Toilettenraum steht und sich etwa mit einem Rollstuhl verklemmt.

Ein vorteilhafter Verriegelungsmechanismus könnte sich über die gesamte Raumhöhe der Kabine des Verkehrsmittels erstrecken, so dass die Trennwand sowohl an einem Fußboden der Kabine befestigt wird, als auch an einer Decke der Kabine. Es würde sich anbieten, ein Betätigungsmittel in Hüfthöhe an der Trennwand anzubringen, von der sich jeweils ein linienförmiges Bewegungsmittel zu dem Fußboden und/oder der Decke der Kabine erstreckt, etwa ein Bowdenzug, eine Schubstange, ein Seil oder dergleichen. Durch Betätigen des Betätigungsmittels könnten dadurch Zapfen oder Stifte in Öffnungen in dem Fußboden und/oder der Decke der Kabine eingebracht werden oder aus diesen herausgelöst werden. Ebenso könnte die Ver- und Entriegelung der Tür- und Trennwandelemente elektrisch, hydraulisch, pneumatisch oder auf andere Weise automatisiert durchgeführt werden. Autorisiertes Personal könnte demnach die Verriegelung ohne zusätzliches Werkzeug, beispielsweise durch Betätigen eines für Passagiere nicht zugänglichen Schalters außerhalb der Toilettenräume lösen, um den Umbau durchzuführen.

An dieser Stelle sei darauf hingewiesen, dass der Verriegelungsmechanismus der Trennwand möglichst nur von einem Besatzungsmitglied des Verkehrsmittels bewegt werden können sollte, damit eine versehentliche Bedienung aus einem der beiden Toilettenräume ausgeschlossen und die Privatsphäre eines Benutzers des angrenzenden Toilettenraums gesichert werden kann. Hier könnte sich ein Schloss oder ein anderes Betätigungsmittel anbieten, welches nur mit einem speziellen Schlüssel oder einem anderen speziellen Werkzeug betätigt werden kann, wie etwa über ein Dreiecks-Profil oder dergleichen.

Gemäß einer weiteren Ausführungsform der Erfindung ist die Trennwand aus zwei einzelnen Trennwandsegmenten aufgebaut, die beide individuell und separat voneinander bewegbar gelagert sind. Diese Trennwand könnte sich beispielsweise wie ein Flügeltürpaar verhalten, so dass beide Trennwandsegmente in unterschiedliche Richtungen aufgeschwenkt werden können.

Gemäß einer weiteren Ausführungsform der Erfindung ist ein erstes Trennwandsegment dazu eingerichtet, von einer Position zwischen dem ersten Toilettenraum und dem zweiten Toilettenraum an eine erste Seitenwand des ersten oder des zweiten Toilettenraums verschwenkt zu werden, während das zweite Trennwandsegment dazu eingerichtet ist, in einen Bereich aufgeschwenkt zu werden, der weder in dem ersten Toilettenraum noch in dem zweiten Toilettenraum liegt. Nach Befahren des gemeinsamen Toilettenraums kann das zweite Trennwandsegment wieder zu dem gemeinsamen Toilettenraum zurückgeschwenkt werden, um beispielsweise als Tür oder Verschlussklappe der erfindungsgemäßen Toilettenanordnung verwendet zu werden.

Gemäß einer weiteren Ausführungsform der erfindungsgemäßen Toilettenanordnung stehen die Erstreckungsachsen des ersten Toilettenraums und des zweiten Toilettenraums im Wesentlichen senkrecht zueinander. Dies bedeutet, dass der erste Toilettenraum und der zweite Toilettenraum eine L-Form bilden, die besonders für die Unterteilung der Trennwand in zwei Trennwandsegmente vorteilhaft ist.

Gemäß einer weiteren Ausführungsform der vorliegenden Erfindung weist der erste Toilettenraum eine erste Toilettenraumtür auf, die um eine erste Türscharnierachse schwenkbar gelagert ist, wobei diese erste Türscharnierachse von dem zweiten Toilettenraum beabstandet angeordnet ist. Dadurch kann die erste Toilettenraumtür parallel zu der Erstreckungsrichtung des zweiten Toilettenraums und von dem zweiten Toilettenraum beabstandet geschwenkt werden, um dort als eine Seitenfläche eines Eingangsbereichs eines gemeinsamen Toilettenraums verwendet werden.

Gemäß einer weiteren Ausführungsform der Erfindung sind die Trennwandsegmente schwenkbar gelagert. Das zweite Trennwandsegment ist dazu eingerichtet, mit der ersten Toilettenraumtür verbunden zu werden oder an ihr arretiert zu werden, so dass die Kombination aus erster Toilettenraumtür und zweitem Trennwandsegment einen neuen Eingangsbereich eines gemeinsamen Toilettenraums ausbildet. Da sowohl die erste Toilettenraumtür als auch das zweite Trennwandsegment außerhalb des ersten und des zweiten Toilettenraums positioniert sind, kann ohne zusätzliche Beanspruchung von Bauraum mehr Fläche für den gemeinsamen Toilettenraum angeboten werden, als von den beiden separaten Toilettenräumen zusammen.

Gemäß der Erfindung ist an dem ersten Toilettenraum an einem vom zweiten Toilettenraum beabstandeten Ende ein Kabinenmonument angeordnet. Insbesondere bei einer L-förmigen Anordnung der beiden Toilettenräume zueinander kann restlicher Bauraum beispielsweise im Heck des Verkehrsmittels genutzt werden, um eine möglichst kompakte Integration von verschiedenen Funktionen zu erreichen.

Gemäß der Erfindung ist dieses zusätzliche Monument eine Bordküche.

Gemäß einem weiteren Beispiel ist das zusätzliche Monument ein dritter Toilettenraum.

Grundsätzlich ist die erfindungsgemäße Toilettenanordnung mit Hilfsmitteln wie Griffen, Bügeln und dergleichen ausstattbar, die es bewegungseingeschränkten Personen ermöglichen, sich darin sicher und eigenständig bewegen zu können.

Es wird außerdem ein Luftfahrzeug vorgeschlagen, das mindestens eine Passagierkabine sowie mindestens eine erfindungsgemäße Toilettenanordnung aufweist. Bevorzugt ist die erfindungsgemäße Toilettenanordnung in einem Rumpfheck angeordnet, das im Fall eines aktiv druckbeaufschlagten Flugzeugrumpfs üblicherweise ein vom Rumpf aus gesehen konkaves Druckschott aufweist. Durch die konkave Formgebung wird zusätzlicher Bauraum bereitgestellt, der von der erfindungsgemäßen Toilettenanordnung nutzbar gemacht wird, etwa zur Integration von Waschbecken oder dergleichen.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele in den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.
Fig. 1 zeigt eine Hecksektion einer Flugzeugkabine mit einer erfindungsgemäßen Toilettenanordnung.
Fig. 2a-2f zeigen eine Hecksektion einer Flugzeugkabine mit einer erfindungsgemäßen Toilettenanordnung im Verlauf einer Konvertierung von zwei voneinander getrennten Toilettenräumen zu einem gemeinsamen Toilettenraum.
Fig. 3 zeigt eine Abwandlung einer erfindungsgemäßen Toilettenanordnung.
Fig. 4 zeigt ein Flugzeug mit mindestens einer Passagierkabine und mindestens einer erfindungsgemäßen Toilettenanordnung.

### DETAILLIERTE DARSTELLUNG EXEMPLARISCHER

### AUSFÜHRUNGSFORMEN

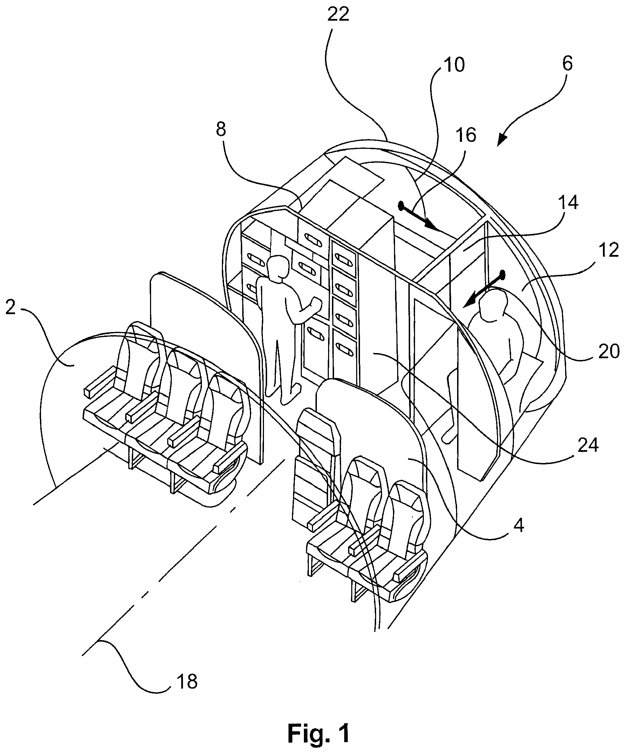

In Fig. 1 wird eine Hecksektion einer Passagierkabine 2 eines Flugzeugs gezeigt, bei der eine letzte Sitzreihe mit daran anschließenden Partitionen 4 zu sehen ist, hinter der sich eine erfindungsgemäße Toilettenanordnung 6 sowie ein weiteres Monument 8 anschließen. Die erfindungsgemäße Toilettenanordnung 6 weist einen ersten Toilettenraum 10, einen davon unabhängigen zweiten Toilettenraum 12 und eine dazwischen liegende Trennwand 14 auf. Der erste Toilettenraum 10 weist eine Erstreckungsrichtung 16 auf, die senkrecht zu einer Längsachse 18 des Flugzeugrumpfs 2 ausgerichtet ist. Der zweite Toilettenraum 12 weist eine Erstreckungsrichtung 20 auf, die im Wesentlichen parallel zu der Längsachse 18 des Flugzeugrumpfs 2 verläuft. Dies bedeutet, dass der erste Toilettenraum 10 und der zweite Toilettenraum 12 in der gezeigten Darstellung exemplarisch zueinander senkrecht stehende Erstreckungsrichtungen 16 und 20 aufweisen und dadurch eine L-Form ausbilden.

In dem gezeigten Ausführungsbeispiel ist die erfindungsgemäße Toilettenanordnung 6 derart in einem Heckbereich der Passagierkabine 2 angeordnet, dass ein für einen aktiv druckbeaufschlagten Flugzeugrumpf 2 übliches Druckschott 22 der Passagierkabine 2 als äußerste Abschlusswand dient. Durch die konkave Formgebung wird zusätzlicher Bauraum bzw. Bewegungsraum für Personen und Grundfläche bereitgestellt, so dass die erfindungsgemäße Toilettenanordnung 6 äußerst kompakt gestaltet sein kann.

Der zweite Toilettenraum 12 ist exemplarisch durch eine backbordseitige Rumpfwand nach außen hin begrenzt, der erste Toilettenraum 10 schließt sich bündig an den zweiten Toilettenraum 12 an. Dies bedeutet bei der gezeigten Größe des Flugzeugrumpfs, dass an einem Ende des ersten Toilettenraums 10, welches von dem zweiten Toilettenraum 12 beabstandet ist, zusätzlicher Bauraum für das Monument 8 bereitgestellt ist, so dass die Hecksektion der Passagierkabine 2 besonders effizient genutzt werden kann. In dem gezeigten Beispiel ist das zusätzlich angebrachte Monument 8 als eine Flugzeugküche realisiert, deren Erstreckung in der Kabinenquerrichtung auf die Größe der ersten Toilettenraumtür 24 zur uneingeschränkten Verwendbarkeit abgestimmt ist.

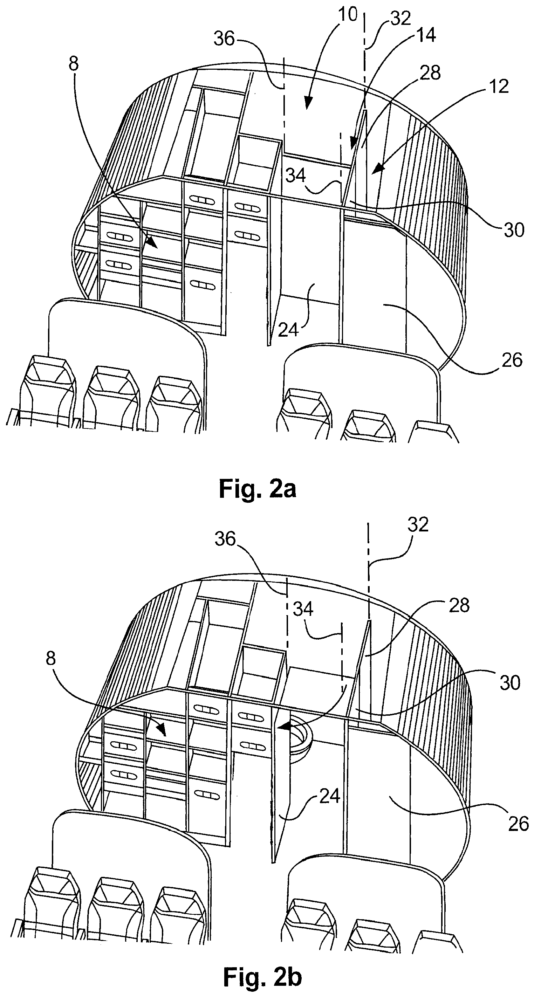

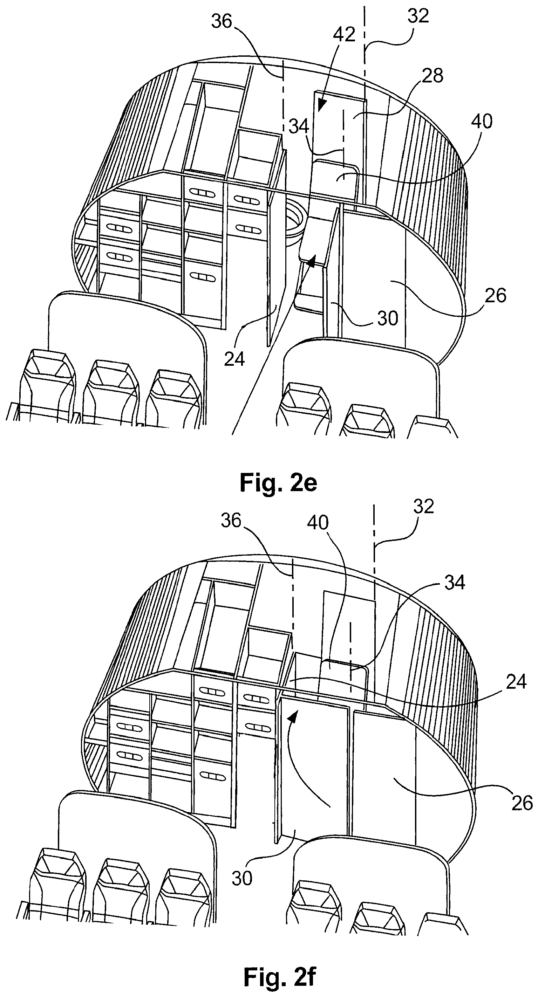

Im weiteren Verlauf wird auf die Konvertierbarkeit der erfindungsgemäßen Toilettenanordnung 6 mit Bezugnahme auf die Figuren 2a bis 2f detailliert eingegangen. Dort wird die Anordnung aus Fig. 1 gezeigt, der Einfachheit halber jedoch ohne darin befindliche Personen sowie aus einem etwas geänderten Betrachtungswinkel. Die zwei Toilettenräume der erfindungsgemäßen Toilettenanordnung können mit wenigen Handgriffen und bevorzugt ohne Zuhilfenahme von Werkzeug, der Hinzufügung oder Entnahme von Bauteilen und ohne Einschränkungen während des Flugs, bevorzugt durch einen Flugbegleiter, in einen vergrößerten Toilettenraum umgewandelt werden. Nach Benutzung dieses vergrößerten Toilettenraums kann die erfindungsgemäße Toilettenanordnung wieder zu zwei voneinander getrennten Toilettenräumen umgebaut werden.

Zunächst ist in Fig. 2a der erste Toilettenraum 10 durch die ersten Toilettenraumtür 24 geschlossen. Der zweite Toilettenraum 12 ist durch eine zweite Toilettenraumtür 26 ebenfalls geschlossen. Zwischen den Toilettenräumen 10 und 12 befindet sich eine Trennwand 14, die aus einem ersten Trennwandsegment 28 und einem zweiten Trennwandsegment 30 besteht. In dem gezeigten Beispiel ist das erste Trennwandsegment 28 an einer Scharnierachse 32 gelagert, das zweite Trennwandsegment 30 ist an einer Scharnierachse 34 gelagert. Die beiden Scharnierachsen 32 und 34 sind in dem gezeigten Beispiel voneinander beabstandet positioniert, demnach ist die Trennwand 14 als eine Art Flügel- oder Doppeltür ausgebildet und der zwischen den beiden Scharnierachsen 32 und 34 befindliche Bereich bildet die Begrenzung in Längsrichtung des zweiten Toilettenraums 12.

Um die beiden Toilettenräume 10 und 12 zu einem gemeinsamen Toilettenraum zu verbinden, wird zunächst die erste Toilettenraumtür 24 nach außen von den beiden Toilettenräumen 10 und 12 weg gerichtet geöffnet, wie in Fig. 2b durch einen Pfeil angedeutet. Dies geschieht durch eine Schwenkbewegung der ersten Toilettenraumtür 24 um eine Scharnierachse 36, die an einer Begrenzungswand des ersten Toilettenraums 10 angeordnet ist.

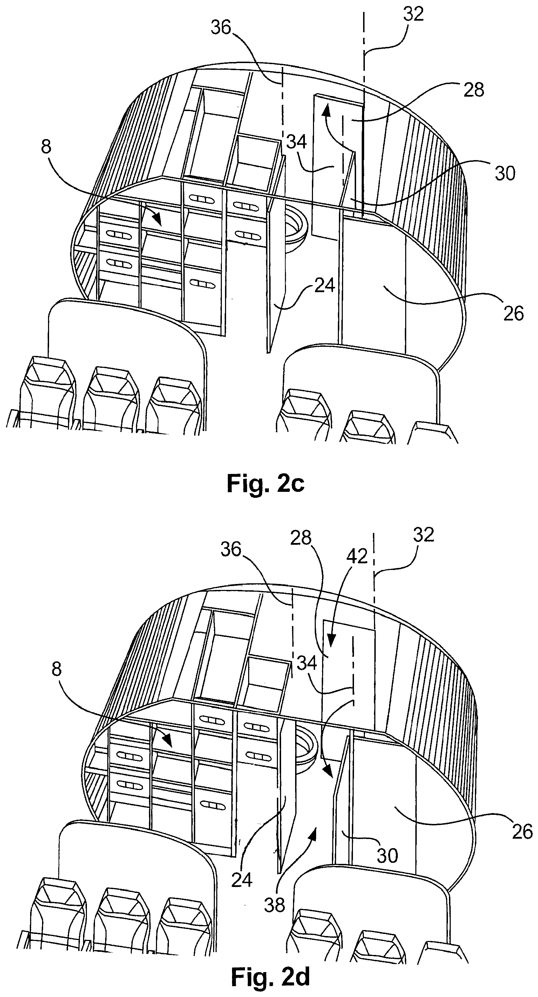

Anschließend wird das erste Trennwandsegment 28, wie in Fig. 2c zu sehen, nach einer entsprechenden Entriegelung aus einem Kabinenfußboden und/oder einer Kabinendecke und/oder dem zweiten Trennwandsegment 30 um die Scharnierachse 32 zu dem Druckschott 22 hin bewegt, so dass eine Öffnung zwischen dem ersten Toilettenraum 10 und dem zweiten Toilettenraum 12 entsteht. In dieser erreichten Position ist es besonders vorteilhaft, das erste Trennwandsegment 28 zu verriegeln und dadurch dessen Position bis zu ihrer erneuten Entriegelung festzulegen.

In einem weiteren Schritt wird das zweite Trennwandsegment 30, wie in Fig. 2d zu sehen, nach einer Entriegelung aus dem Kabinenfußboden und/oder der Kabinendecke um die Scharnierachse 34 um grob 180° nach außen bewegt, so dass dadurch der erste Toilettenraum 10 und der zweite Toilettenraum 12 vollständig miteinander verbunden werden. In dieser Position entsteht eine Öffnung 38, durch die ein Rollstuhl 40 mühelos in den nun gemeinsamen Toilettenraum 42 eingebracht werden kann.

Nach einer anschließenden Verschwenkung des zweiten Trennwandsegments 30 um die Scharnierachse 34 zu der Öffnung 38 hin entsteht eine Abtrennung des gemeinsamen Toilettenraums 42 nach außen. Das zweite Trennwandsegment 30 wird dementsprechend als neue Eingangstür zu dem gemeinsamen Toilettenraum 42 verwendet. Weiterhin bildet in dieser Anordnung die erste Toilettenraumtür 24 eine Seitenwand des Eingangsbereichs zu dem gemeinsamen Toilettenraum 42, die parallel zu der Erstreckungsrichtung 20 des zweiten Toilettenraums 12 und beabstandet zu dem zweiten Toilettenraum 12 angeordnet ist.

In dem gemeinsamen Toilettenraum 42 ist nun ausreichend Raum vorhanden, von dem Rollstuhl 40 auf einen Toilettensitz oder dergleichen zu gelangen. Bei Bedarf kann der gemeinsame Toilettenraum 42 wieder in zwei voneinander separate Toilettenräume 10 und 12 zurückkonvertiert werden.

Es ist für einen Fachmann verständlich, dass die Trennwandsegmente 28 und 30 sowie die erste Toilettentür 24 mit mindestens einem Verriegelungsmechanismus ausgestattet sind, so dass diese Elemente in den unterschiedlichen Positionen aus den Figuren 1 bis 2f arretiert werden können.

Gleichermaßen sollte sichergestellt werden, dass die zweite Toilettenraumtür 26 nach einer Konvertierung zu einem größeren Toilettenraum von innen verriegelt wird, um den Zutritt von dritten Personen zu verhindern. Bei Bedarf sollte es jedoch einem Flugbegleiter möglich sein, die zweite Toilettenraumtür 26 von außen zu entriegeln, wenn Hilfe benötigt wird.

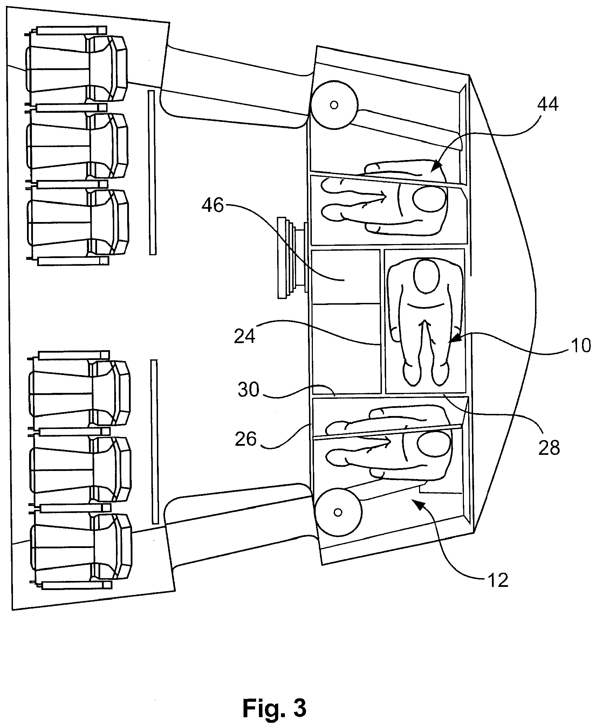

Wie in Fig. 3 gezeigt, kann bei der erfindungsgemäßen Toilettenanordnung 6 als zusätzliches Monument auch ein zusätzlicher, dritter Toilettenraum 44 hinter einem ersten Toilettenraum 10 auf einer zum zweiten Toilettenraum 12 beabstandeten Seite angeordnet werden, um eine möglichst kompakte und einen geringen Bauraum beanspruchende erfindungsgemäße Toilettenanordnung realisieren zu können.

Zusätzlich könnte ein Bereich an einer Berührungsstelle zwischen dem erstem Toilettenraum 10 und dem drittem Toilettenraum 44 dazu dienen, einen Stauschrank 46 aufzunehmen, der auf die Breite der ersten Toilettentür 24 angepasst ist.

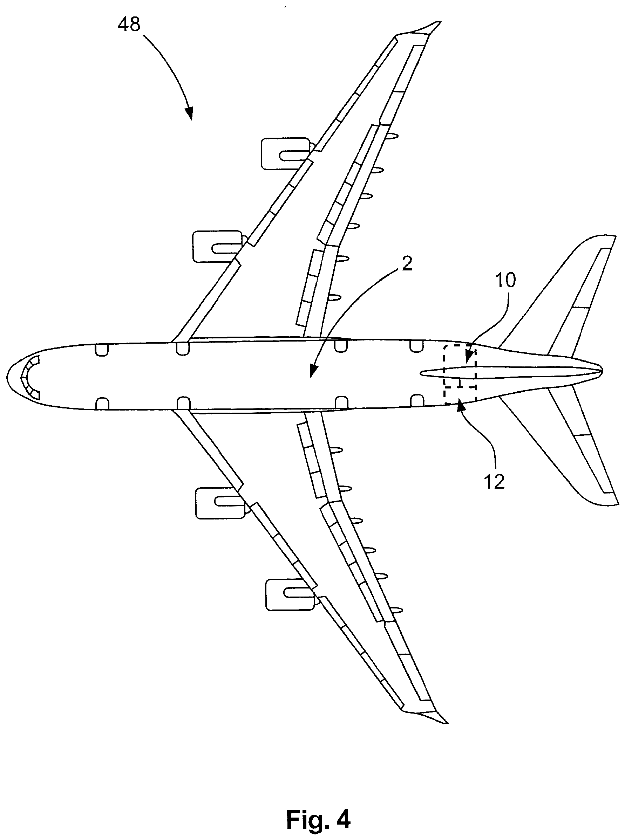

Schließlich zeigt Fig. 4 ein exemplarisches Flugzeug 48, das eine oder mehrere Passagierkabinen 2 aufweisen könnte, die mit einer oder mehreren erfindungsgemäßen Toilettenanordnungen gemäß den obigen Darstellungen ausgerüstet sein könnte.

Ergänzend sei darauf hinzuweisen, dass "aufweisend" keine anderen Elemente oder Schritte ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

### BEZUGSZEICHEN

- 2: Passagierkabine
- 4: Partition
- 6: Erfindungsgemäße Toilettenanordnung
- 8: Monument
- 10: Erster Toilettenraum
- 12: Zweiter Toilettenraum
- 14: Trennwand
- 16: Erstreckungsrichtung
- 18: Längsachse
- 20: Erstreckungsrichtung
- 22: Druckschott
- 24: Erste Toilettentür
- 26: Zweite Toilettentür
- 28: Erstes Trennwandsegment
- 30: Zweites Trennwandsegment
- 32: Scharnierachse
- 34: Scharnierachse
- 36: Scharnierachse
- 38: Öffnung
- 40: Rollstuhl
- 42: Gemeinsamer Toilettenraum
- 44: Dritter Toilettenraum
- 46: Stauschrank
- 48: Flugzeug

## Patentansprüche

1. Eine Passagierkabine für ein Luftfahrzeug mit einer darin angeordneten Toilettenanordnung, wobei die Toilettenanordnung aufweist:
- einen ersten Toilettenraum (10),
- einen dazu benachbarten zweiten Toilettenraum (12) und
- eine zwischen dem ersten Toilettenraum (10) und dem zweiten Toilettenraum (12) befindliche Trennwand (14, 28, 30);
wobei der erste Toilettenraum und der zweite Toilettenraum mittels der Trennwand als voneinander unabhängige Toilettenräume ausbildbar sind;
wobei die Trennwand (14) bewegbar gelagert ist und dazu eingerichtet ist, in eine Öffnungsposition gebracht zu werden, bei der eine Abtrennung zwischen dem ersten Toilettenraum (10) und dem zweiten Toilettenraum (20) aufgehoben wird;
wobei durch Bewegen der Trennwand in die Öffnungsposition ein gemeinsamer Toilettenraum ausbildbar ist, der zum Befahren mit einem Rollstuhl und zum vorübergehenden Lagern des Rollstuhls auf einer begehbaren Fläche einer der beiden ursprünglich voneinander unabhängigen Toilettenräume ausreicht, wobei der gemeinsame Toilettenraum derart dimensioniert ist, dass es einer zweiten Person ermöglicht ist, einer bewegungseingeschränkten Person in dem gemeinsamen Toilettenraum behilflich zu sein;
wobei an einem vom zweiten Toilettenraum beabstandeten Ende des ersten Toilettenraums (10) ein Kabinenmonument (8) angeordnet ist;
wobei das Kabinenmonument (8) eine Bordküche ist; und
wobei die mindestens eine Toilettenanordnung in einem Heckbereich der Passagierkabine angeordnet ist und direkt an einem als Begrenzungswand dienenden Druckschott (22) angeordnet ist.

2. Passagierkabine nach Anspruch 1, wobei die Trennwand (14, 28, 30) aus zwei einzelnen Trennwandsegmenten (28, 30) aufgebaut, die bewegbar gelagert sind.

3. Passagierkabine nach Anspruch 1 oder 2, wobei ein erstes Trennwandsegment dazu eingerichtet ist, an eine erste Seitenwand des ersten Toilettenraums (10) geklappt zu werden, während das zweite Trennwandsegment dazu eingerichtet ist, in einen Bereich aufgeschwenkt zu werden, der nicht in dem ersten Toilettenraum (10) und nicht in dem zweiten Toilettenraum (12) liegt.

4. Passagierkabine nach einem der vorhergehenden Ansprüche, wobei eine Erstreckungsrichtung (16) des ersten Toilettenraums (10) und eine Erstreckungsrichtung (20) des zweiten Toilettenraums (12) im Wesentlichen senkrecht zueinander stehen.

5. Passagierkabine nach einem der vorhergehenden Ansprüche, wobei der erste Toilettenraum (10) eine erste Toilettenraumtür (24) aufweist, die um eine erste Türscharnierachse (36) schwenkbar gelagert ist, wobei die erste Türscharnierachse (36) von dem zweiten Toilettenraum (12) beabstandet angeordnet ist.

6. Ein Luftfahrzeug (48) mit einer Passagierkabine nach einem der Ansprüche 1 bis 5.

## Claims

1. A passenger cabin for an aircraft with a toilet arrangement arranged therein, wherein the toilet arrangement comprises:
- a first toilet compartment (10),
- a second toilet compartment (12), which is adjacent to the first, and
- a separating wall (14, 28, 30), which is situated between the first toilet compartment (10) and the second toilet compartment (12);
wherein the first toilet compartment and the second toilet compartment can be formed as independent toilet compartments using the separating wall;
wherein the separating wall (14) is mounted in a movable manner and is configured to be brought into an open position in which there is no separation between the first toilet compartment (10) and the second toilet compartment (12);
wherein, by moving the separating wall into the open position, a common toilet compartment can be formed, which is sufficient to be accessed by a wheelchair and to temporarily store the wheelchair on a walkable area of one of the two originally independent toilet compartments, wherein the common toilet compartment is dimensioned in such a manner that it is possible for a second person to assist a person with reduced mobility inside of the common toilet compartment;
wherein a cabin monument (8) is arranged on one end of the first toilet compartment (10) that is spaced apart from the second toilet compartment;
wherein the cabin monument (8) is a galley; and
wherein the at least one toilet arrangement is arranged in a rear region of the at least one passenger cabin and is arranged directly on a pressure bulkhead (22), which serves as delimiting wall.

2. Passenger cabin according to Claim 1, wherein the separating wall (14, 28, 30) is constructed from two individual separating wall segments (28, 30) which are mounted in a movable manner.

3. Passenger cabin according to Claim 1 or 2, wherein a first separating wall segment is configured to be swung onto a first side wall of the first toilet compartment (10), while the second separating wall segment is configured to be pivoted into a region which is not situated in the first toilet compartment (10) and which is not situated in the second toilet compartment (12).

4. Passenger cabin according to one of the preceding claims, wherein a direction of extent (16) of the first toilet compartment (10) and a direction of extent (20) of the second toilet compartment (12) are substantially perpendicular to one another.

5. Passenger cabin according to one of the preceding claims, wherein the first toilet compartment (10) has a first toilet compartment door (24), which is mounted so as to be pivotable about a first door hinge axis (36), wherein the first door hinge axis (36) is arranged spaced apart from the second toilet compartment (12).

6. An aircraft (48) with a passenger cabin according to one of Claims 1 to 5.

## Revendications

1. Une cabine de passagers pour un aéronef, dans laquelle est aménagé un arrangement de toilette, l'arrangement de toilette comprenant:
- un premier espace de toilette (10),
- un deuxième espace de toilette (12) voisin de celui-ci et
- une paroi de séparation (14, 28, 30) qui se trouve entre le premier espace de toilette (10) et le deuxième espace de toilette (12);
le premier espace de toilette et le deuxième espace de toilette étant configurables, au moyen de la paroi de séparation, en espaces de toilettes indépendants l'un de l'autre;
la paroi de séparation (14) étant supportée avec mobilité et étant conçue pour être amenée dans une position d'ouverture, avec laquelle une séparation entre le premier espace de toilette (10) et le deuxième espace de toilette (12) est annulée;
le déplacement de la paroi de séparation dans la position d'ouverture permettant de former un espace de toilettes commun pour permettre l'accès en fauteuil roulant et le stationnement temporaire du fauteuil roulant sur la surface praticable de l'un de deux espaces de toilettes initialement indépendants l'un de l'autre, l'espace de toilette commun étant dimensionné de sorte qu'une deuxième personne puisse aider une personne à mobilité réduite dans l'espace de toilette commun;
une structure d'ameublement de cabine (8) étant dispose au niveau d'une extrémité du premier espace de toilette (10) qui est espacée du deuxième espace de toilette;
la structure d'ameublement de cabine (8) étant une cuisine de bord; et
l'au moins un arrangement de toilette étant disposé dans une zone arrière de la cabine de passagers et étant disposé directement contre une cloison étanche (22) servant de paroi de séparation.

2. Cabine de passagers selon la revendication 1, la paroi de séparation (14, 28, 30) étant constituée de deux segments de paroi de séparation (28, 30) individuels qui sont supportées avec mobilité.

3. Cabine de passagers selon les revendications 1 ou 2, un premier segment de paroi séparation étant conçu pour être rabattu contre une première paroi latérale du premier espace de toilette (10), alors que le deuxième segment de paroi de séparation est conçu pour être pivoté vers l'extérieur dans une zone qui ne se trouve pas dans le premier espace de toilette (10) et pas dans le deuxième espace de toilette (12).

4. Cabine de passagers selon l'une des revendications précédentes, une direction d'extension (16) du premier espace de toilette (10) et une direction d'extension (20) du deuxième espace de toilette (12) étant sensiblement perpendiculaires l'une à l'autre.

5. Cabine de passagers selon l'une des revendications précédentes, le premier espace de toilette (10) possédant une première porte d'espace de toilette (24), laquelle est supportée avec mobilité autour d'un premier axe de charnière de porte (36), le premier axe de charnière de porte (36) étant disposé espacé du deuxième espace de toilette (12).

6. Un aéronef (48) avec une cabine de passagers selon l'une des revendications 1 à 5.
